# EUROPÄISCHE PATENTSCHRIFT

(11) **EP 3 261 892 B1**
(45) Veröffentlichungstag und Bekanntmachung des Hinweises auf die Patenterteilung: **06.04.2022**
(21) Anmeldenummer: 16705775.1
(22) Anmeldetag: 19.02.2016
(51) Int. Cl.: B60W 50/10, B62D 15/02, B60W 30/18, G08G 1/16

(54) **SPURWECHSELASSISTENZSYSTEM FÜR EIN KRAFTFAHRZEUG**
LANE CHANGE ASSISTANCE SYSTEM FOR A MOTOR VEHICLE
SYSTÈME D'AIDE AU CHANGEMENT DE VOIE POUR VÉHICULE AUTOMOBILE

(30) Priorität: 23.02.2015 DE 102015203208
(43) Veröffentlichungstag der Anmeldung: 03.01.2018
(73) Patentinhaber: Bayerische Motoren Werke Aktiengesellschaft, 80809 München (DE)
(72) Erfinder: AEBERHARD, Michael, 80805 München (DE); BAHRAM, Mohammad, 80637 München (DE); TRÜBSWETTER, Ilona, 80637 München (DE); MÜLLER, Andreas, 80799 München (DE)
(86) Internationale Anmeldenummer: PCT/EP2016/053510
(87) Internationale Veröffentlichungsnummer: WO 2016/135049

(56) Entgegenhaltungen:
- DE-A1- 10 210 723
- DE-A1-102012 002 318
- DE-C1- 4 313 568
- US-A1- 2012 296 522

## Beschreibung

Die Erfindung betrifft ein Spurwechselassistenzsystem mit einer automatisierten Spurwechselfunktion für ein Kraftfahrzeug, welches das Fahrzeug auf einen Spurwechselwunsch des Fahrers hin im Rahmen eines automatisierten Spurwechselmanövers mit zumindest automatischer Querführung ausgehend von einer Ausgangsfahrspur auf eine benachbarte Nebenfahrspur automatisiert steuert. Es kann auch vorgesehen sein, dass neben der Querführung auch die Längsführung vom System automatisiert durchgeführt wird.

Bei bekannten Spurwechselassistenzsystemen mit einer automatisierten Spurenwechselfunktion entscheidet typischerweise der Fahrer über einen Spurwechsel auf eine Nebenfahrspur. Dazu gibt der Fahrer über ein entsprechendes Bedienelement seinen Wunsch zum Wechseln der Fahrspur an. Mittels einer Umfeldsensorik zur Erfassung von Umfeldinformation bezüglich der Nebenfahrspur überprüft das System typischerweise, ob die Rahmenbedingungen für einen Spurwechsel erfüllt sind, d. h. ob beispielsweise ein ausreichender Freiraum auf der Nebenfahrspur vorliegt und eine Kollision ausgeschlossen ist. Anschließend führt das System eine an das Umfeld angepasste Querführung und optional Längsführung des Fahrzeugs durch, um das Fahrzeug ausgehend von der Ausgangsfahrspur auf die benachbarte Nebenfahrspur automatisiert zu steuern.

In derartigen Spurwechselassistenzsystemen wird typischerweise ein fahrerseitiger Spurwechselwunsch durch ein einmaliges Betätigen eines Bedienelementes signalisiert, beispielsweise eines Blinkerhebels oder eines hierfür extra vorgesehenen Bedienelements wie eines zusätzlichen Tasters. Wenn der Fahrer jedoch den durch das einmalige Betätigen signalisierten Fahrerwunsch revidieren möchte, kann dies beispielsweise durch ein umständliches Betätigen einer hierfür vorgesehen Taste erfolgen. Darüber hinaus kann es bei einem einmaligen Betätigen eines Bedienelements, beispielsweise des Blinkerhebels, zur Signalisierung des Spurwechselwunsches passieren, dass der Fahrer anschließend vergisst, dass er den Spurwechselwunsch vorher geäußert hat. Wenn beispielsweise durch Fahrzeuge auf der Nebenfahrspur der Spurwechsel nicht unverzüglich umgesetzt werden kann, kann es sein, dass ein später einsetzendes automatisiertes Spurwechselmanöver nicht mehr vom Fahrer gewünscht wird oder der Fahrer aufgrund der verstrichenen Zeit seit Betätigen des Bedienelements bis zum Einsetzen des automatisierten Spurwechselmanöver durch das Fahrmanöver nachteilhaft überrascht wird.

Aus der Druckschrift DE 102 10 723 A1 ist ein Spurwechselassistenzsystem mit automatischer Querführung bekannt, welches auf einen Befehl des Fahrers hin einen automatischen Wechsel des Fahrzeugs auf eine Nachbarspur steuert und einen in entgegengesetzte Richtungen aus einer Neutralstellung bewegbaren Blinkerhebel aufweist, wobei dem Blinkerhebel für jede Verstellrichtung ein Sensor zugeordnet ist, der ein der Betätigung des Blinkerhebels entsprechendes mehrwertiges Ausgangssignal liefert, das die Dynamik des Spurwechselvorgangs bestimmt. Nachdem das Spurwechselmanöver bereits eingeleitet wurde, muss der Fahrer während der ersten Hälfte des Spurwechselvorgangs (d. h. bis das Fahrzeug die Grenze zu der Nachbarfahrspur überquert) den Blinkerhebel dauerhaft betätigen, andernfalls wird der Spurwechsel abgebrochen.

In der Druckschrift DE 10 2004 029 369 A1 ist ein Spurwechselassistenzsystem mit automatisierte Längsführung, jedoch ohne automatisierte Querführung beschrieben. Hier wird anhand der Information einer Umfeldsensorik ein Fenster für ein gefahrloses Einscheren auf die Nebenfahrspur erkannt. Mittels Betätigung des Blinkers kann ein Spurwechselwunsch des Fahrers an das System signalisiert werden, und das System löst im Fall eines derartigen Fensters für ein gefahrloses Einscheren unmittelbar ein Spurwechselmanöver mit automatisierter Längsführung aus.

Es ist Aufgabe der Erfindung, ein Spurwechselassistenzsystem und ein entsprechendes Verfahren anzugeben, wobei das Assistenzsystem nicht fälschlicherweise von einem weiterhin aktuellen Spurwechselwunsch des Fahrers ausgeht, wenn es auf einen geeigneten Zeitpunkt zum Einleiten des Spurwechselmanövers wartet, und umgekehrt in dieser Situation der Fahrer sich einer aktiven, auf einen geeigneten Zeitpunkt zum Einleiten des Spurwechselmanövers wartenden Spurwechselassistenzfunktion bewusst ist.

Die Aufgabe wird durch die Merkmale der unabhängigen Patentansprüche gelöst. Vorteilhafte Ausführungsformen sind in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs oder einer Teilungsanmeldung gemacht werden kann.

Ein erster Aspekt der Erfindung betrifft ein Spurwechselassistenzsystem mit einer Spurwechselassistenzfunktion für ein Kraftfahrzeug. Das Spurwechselassistenzsystem ist eingerichtet, das Fahrzeug auf einen Spurwechselwunsch des Fahrers hin im Rahmen eines automatisierten Spurwechselmanövers mit zumindest automatischer Querführung ausgehend von einer Ausgangsfahrspur auf eine benachbarte Nebenfahrspur automatisiert zu steuern. Hierbei ist es auch denkbar, dass vom Assistenzsystem neben der Querführung auch die Längsführung für den Spurwechsel übernommen wird.

Es ist ein vom Fahrer durch eine dauerhafte Fahrerhandlung dauerhaft betätigbares Bedienelement im Fahrzeugcockpit, insbesondere am Lenkstock oder am Lenkrad, vorgesehen. Beispielweise handelt es sich hierbei um einen als Lenkstockhebel ausgebildeten Blinkerhebel zum Auslösen eines als Fahrtrichtungsanzeige für andere Verkehrsteilnehmer dienenden Blinkers. Zur Dauerbetätigung des Bedienelements muss der Fahrer für die Dauer der Betätigung eine Handlung vornehmen, insbesondere für die Dauer der Betätigung eine Kraft aufbringen, beispielsweise einen Blinkerhebel gegen eine Gegenkraft drücken oder eine Taste dauerhaft gegen eine Gegenkraft drücken. Es wäre auch möglich, dass für die Betätigung keine Kraft aufgebracht wird, beispielsweise wird eine Touch-Fläche ohne merkliche Krafteinwirkung für die Dauer der Betätigung berührt.

Ferner ist eine Umfeldsensorik zur Erfassung von Umfeldinformation bezüglich zumindest der Nebenfahrspur vorgesehen, insbesondere bezüglich des Verkehrs zumindest auf der Nebenfahrspur. Es kann außerdem vorgesehen sein, dass die Umfeldsensorik auch den Verkehr auf der Ausgangsfahrspur erfasst; dies ist jedoch nicht zwingend. Die Umfeldsensorik kann einen oder mehrere Sensoren umfassen, z. B. einen Radarsensor, einen Ultraschallsensor oder eine Kamera. Die Umfeldsensorik umfasst insbesondere einen von Fahrzeugseite auf die Nebenspur gerichteten Sensor (beispielsweise ein Seitenradar), mittels dem beispielsweise die Position eines Objekts auf der Nebenfahrspur und dessen Geschwindigkeit erfasst kann. Ferner kann eine Frontkamera vorgesehen sein, um das Vorhandensein der Nebenfahrspur festzustellen und die Nebenfahrspur zu vermessen.

Das Spurwechselassistenzsystem ist eingerichtet, eine anfängliche Betätigung des Bedienelements festzustellen, welche einen fahrerseitigen Spurwechselwunsch anzeigt und die Spurwechselassistenzfunktion aktiviert. Der Fahrer betätigt beispielsweise den Blinkerhebel, jedoch nicht nur kurzzeitig, sondern der Blinkerhebel wird gehalten.

Im Rahmen der Anmeldung kann unter der Betätigung eines Bedienelements auch eine bestimmte zwingende Betätigungsweise des Bedienelements verstanden werden, die insbesondere die Stärke der Betätigung betrifft. Zur positiven Feststellung der Betätigung des Bedienelements kann somit die Feststellung einer bestimmten Betätigungsweise des Bedienelements notwendig sein. Sofern beispielsweise ein Blinkerhebel mit Druckpunkt verwendet wird, kann z. B. geprüft werden, ob der Blinkerhebel beispielsweise über einen Druckpunkt hinaus betätigt wird (oder in einer alternativen Ausführungsform zumindest bis zum Druckpunkt betätigt wird), und falls ein Betätigen über den Druckpunkt hinaus festgestellt wird (bzw. in der alternativen Ausführungsform zumindest bis zum Druckpunkt betätigt wird), wird dies als fahrerseitige Spurwechselwunsch interpretiert und die die Spurwechselassistenzfunktion aktiviert; ein nur leichtes Betätigen, ohne über den Druckpunkt hinaus zu gehen (bzw. ohne zumindest den Druckpunkt zu erreichen), wird dann beispielsweise vom System ignoriert.

Bei aktivierter Spurwechselassistenzfunktion wird basierend auf Umfeldinformation bezüglich des Verkehrs zumindest auf der Nebenfahrspur über das Einleiten eines Spurwechselmanövers vom System entschieden. Beispielsweise erfolgt diese Entscheidung anhand der Information einer die Umfeldinformation auswertenden Freiraumerkennung, die prüft, ob auf der Nebenfahrspur ein geeigneter Freiraum für ein gefahrloses Einscheren auf die Nebenfahrspur vorhanden ist.

Sofern keine positive Entscheidung vorliegt, wird wiederholt neu über das Einleiten eines Spurwechselmanövers entschieden, bis schließlich eine positive Entscheidung für das Einleiten des Spurwechselmanövers vorliegt, d. h. bis das System ein Spurwechselmanöver einleiten möchte. Das Fahrzeug entscheidet also selbst, wann es mit dem Lenken auf die Nebenfahrspur beginnt. Das Fahrzeug sucht beispielsweise so lange nach einem Freiraum auf der Nebenspur, bis ein Spurwechsel möglich ist, und leitet diesen dann selbstständig ein.

Es kann vorgesehen sein, dass die Assistenzfunktion vorzugsweise unter Ausgabe eines entsprechenden Hinweises an den Fahrer deaktiviert wird, wenn nach Verstreichen einer bestimmten Dauer oder einer bestimmten Fahrstrecke, immer noch keine positive Entscheidung für das Einleiten des Spurwechselmanövers vorliegt.

Während dieses Entscheidungsprozesses wird parallel fortlaufend geprüft, ob das Bedienelement immer noch betätigt wird. Beispielsweise ist die Elektronik des Bedienelements derart ausgestaltet, dass während der Dauerbetätigung des Bedienelements fortlaufend ein Betätigungssignal erzeugt wird, welches zu dem jeweiligen Zeitpunkt die aktuelle Betätigung des Bedienelements signalisiert; anhand einer Signaländerung kann dann einer Beenden der Betätigung festgestellt werden.

Wie vorstehend bereits erwähnt, kann zur Prüfung der Betätigung des Bedienelements geprüft werden, ob das Bedienelement in einer bestimmten Betätigungsweise des Bedienelements betätigt wird. Hierbei kann bei einem Blinkerhebel mit Druckpunkt insbesondere auch geprüft werden, ob der Blinkerhebel weiterhin über den Druckpunkt hinaus betätigt wird. Das Betätigungssignal gibt beispielsweise für diesen Fall an, ob ein Blinkerhebel mit Druckpunkt nur leicht bis zum Druckpunkt oder über den Druckpunkt hinaus betätigt wird oder überhaupt nicht betätigt wird.

Die fortlaufende Prüfung, dass das Bedienelement weiterhin betätigt wird (und damit auch weiterhin der Fahrer die Bedienhandlung vornimmt), wird zumindest solange fortgesetzt, bis eine positive Entscheidung für das Einleiten des Spurwechselmanövers vorliegt oder alternativ sogar danach bis das Spurwechselmanöver tatsächlich eingeleitet wurde. Es kann auch danach weiterhin die weitere Betätigung des Bedienelements zur Aufrechterhaltung eines Spurwechselmanövers überprüft werden. Beispielsweise könnte vorgesehen sein, dass ein bereits begonnenes Spurwechselmanöver abgebrochen wird, wenn der Fahrer die Betätigung des Bedienelements vor Überschreiten der Grenze zur Nebenfahrspur beendet.

Wenn während dieser fortlaufenden Prüfung festgestellt wird, dass das Bedienelement nicht mehr betätigt wird, wird die Spurwechselassistenzfunktion vor Einleiten eines Spurwechselmanövers deaktiviert. Zum Aufrechterhalten der Spurwechselassistenzfunktion kann eine bestimmte Betätigungsweise wie beispielsweise das Überdrücken eines Druckpunktes bei einem Blinkerhebel mit Druckpunkt notwendig sein. Die Spurwechselassistenzfunktion wird in diesem Fall beispielsweise auch schon dann deaktiviert, wenn ein Blinkerhebel mit Druckpunkt nicht mehr über den Druckpunkt hinaus betätigt wird.

Sofern schließlich eine positive Entscheidung für das Einleiten des Spurwechselmanövers vorliegt und das Bedienelement dann immer noch betätigt wird, wird das Spurwechselmanöver vom System automatisch eingeleitet. Sofern - wie vorstehend beschrieben - beispielsweise eine bestimmte Betätigungsweise zum positiven Feststellen einer Betätigung verlangt wird (beispielsweise das Überdrücken eines Druckpunkts bei einem Blinkerhebel mit Druckpunkt), wird das Spurwechselmanöver vom System beispielsweise automatisch eingeleitet, wenn der Blinkerhebel dann immer noch in dieser Weise betätigt wird. Es könnte aber auch in einer alternativen Ausführungsform bei einem Blinkerhebel mit Druckpunkt ein nur leichtes Betätigen des Blinkerhebels ausreichen.

Nach Einleiten des Spurwechselmanövers wird das Fahrzeug auf die benachbarte Nebenfahrspur mit zumindest automatischer Querführung automatisiert gesteuert. Das Spurwechselmanöver kann auch Teil eines Überholmanövers mit Rückkehr auf die Ausgangsfahrspur sein, so dass nach dem Spurwechsel auf die Nebenfahrspur anschließend das Fahrzeug wieder mit zumindest automatischer Querführung auf die Ausgangsfahrspur zurückgesteuert wird.

Erfindungsgemäß wird das Spurwechselmanöver also bei dauerhafter Betätigung des Bedienelementes, vorzugsweise durch andauerndes Drücken des Blinkerhebels, eingeleitet. Dabei soll der Fahrer auch bei einem noch nicht möglichen Fahrspurwechsel, seinen Wunsch durch fortlaufende Betätigung des Bedienelements, beispielsweise durch Halten des Blinkerhebels in einer bestimmten Position, deutlich machen.

Durch die fortwährende Prüfung der anhaltenden Betätigung des Bedienelementes, während noch keine positive Entscheidung für das Einleiten des Spurwechselmanövers vorliegt (weil beispielsweise aktuell auf der Nebenfahrspur noch kein geeigneter Freiraum für ein gefahrloses Einscheren auf die Nebenfahrspur vorhanden ist), ist es dem Assistenzsystem möglich, auf einfache Weise zu erkennen, ob der Fahrer seinen Spurwechselwunsch weiterhin aufrecht erhält. Weiter ist dem Fahrer durch die andauernde Betätigung des Bedienelements immer bewusst, dass das System die Fahrspur automatisch wechseln wird, nachdem das System einen Spurwechsel durch eine positive Entscheidung freigegeben hat.

Die Spurwechselassistenzfunktion wird vor Einleiten eines (dann nicht mehr durchgeführten) Spurwechselmanövers deaktiviert, wenn festgestellt wird, dass die Betätigung des Bedienelements abgebrochen wird. Wie vorstehend bereits ausführt, kann die Spurwechselassistenzfunktion insbesondere auch schon dann deaktiviert werden, wenn ein Blinkerhebel mit Druckpunkt nicht mehr über den Druckpunkt hinaus betätigt wird. Wenn der Betätigung des Bedienelements abgebrochen wird, dann wird kein Spurwechselmanöver mehr automatisch eingeleitet, d. h. wird beispielsweise der Blinkerhebel vorzeitig losgelassen, wird kein Wechselvorgang mehr eingeleitet.

In einer nicht durch die beanspruchte Erfindung abgedeckten Ausführungsform wäre es alternativ denkbar, dass bei vorzeitiger Beendigung der Betätigung des Bedienelements die Spurwechselassistenzfunktion nicht deaktiviert, sondern nur kein Spurwechselmanöver mehr ausgelöst wird, solange der Fahrer die Betätigung des Bedienelements nach der vorzeitigen Beendigung nicht wieder aufgenommen hat.

In einer nicht durch die beanspruchte Erfindung abgedeckten Ausführungsform wäre es denkbar, dass es sich bei dem Bedienelement um einen zusätzlichen Taster am Fahrzeuglenkrad oder einen am Lenkstock angebrachter Lenkstockhebel handelt, der nicht zum Aktivieren des Blinkers verwendet wird.

Wie vorstehend bereits ausgeführt handelt es sich bei dem Bedienelement um einen als Lenkstockhebel ausgebildeten Blinkerhebel zum Auslösen eines Blinkers, der aus einer Neutralstellung heraus in entgegengesetzte Richtungen bewegbar ist. Der für die automatisierte Spurwechselfunktion verwendete Blinkerhebel kann auch für einen manuellen Spurwechsel eingesetzt werden. Die Verwendung des ohnehin vorhandenen Blinkerhebels für die automatisierte Spurwechselfunktion verursacht keine zusätzlichen Hardwarekosten im Unterschied zur Verwendung eines nur für Spurwechselfunktion vorgesehenen Bedienelements.

Hierbei handelt es sich vorzugsweise um einen Blinkerhebel, der in Bezug auf die beiden entgegengesetzten Richtungen zum Blinken nicht einrastet (in Bezug auf andere Richtung für andere Funktion wie Fernlicht wäre eine Rastfunktion nicht störend). Bei einrastenden Blinkerhebeln rastet bei Drücken des Hebels über eine bestimmte Schwelle hinaus der Blinkerhebel in eine Blinkerhebelposition ein und verharrt in dieser Position ohne weiteres Drücken des Fahrers. Erfindungsgemäß ist aber eine dauerhafte Betätigung des Bedienelements durch den Fahrer notwendig. Es wäre bei einem einrastenden Blinker dann schwer festzustellen, ob der Fahrer den Blinkerhebel tatsächlich noch betätigt oder der Blinkerhebel selbstständig in der Blinkerhebelposition gehalten wird. Außerdem wäre dem Fahrer bei einem einrastenden Blinkerhebel unklar, dass er auch bei Überschreiten der Schwelle der Selbsthaltefunktion den Blinkerhebel weiterhin zu betätigen hat, damit ein Spurwechselmanöver ausgelöst wird.

Beispielsweise wird ein Blinkerhebel mit einem Druckpunkt verwendet, der in Bezug auf die beiden entgegengesetzten Richtungen zum Blinken nicht einrastet. Zum dauerhaften Blinken beim manuellen Wechsel einer Fahrspur oder manuellen Abbiegen, wird der Hebel über einen Druckpunkt hinaus gedrückt. Zum kurzzeitigen Blinken, wird der Hebel bis zum Druckpunkt gedrückt und gehalten, solange geblinkt werden soll. Beispielsweise verlangt das Spurwechselassistenzsystem zum Einleiten eines Spurwechselmanövers, dass der Fahrer das Bedienelement dauerhaft über den Druckpunkt hinaus betätigt.

Mit dem Blinkerhebel als Bedienelement ist die Bedienlogik vorzugsweise die gleiche wie bei einem manuellen Spurwechsel: Zum automatisierten Spurwechsel auf die Nebenfahrspur ist der Blinkerhebel in die gleiche Richtung zu bewegen, in die der Blinkerhebel zur Auslösung des Blinkers bei einem manuellen Spurwechsel auf die Nebenfahrspur zu bewegen ist. Zum Aktivieren des Spurwechselassistenzsystems für einen Spurwechsel auf die linke (rechte) Nebenfahrspur ist der Blinkerhebel vorzugsweise in die Richtung zu bewegen, die der Auslösung des linken (bzw. rechten) Blinkers entspricht.

Vorzugsweise wird bei Betätigung des Blinkerhebels (beispielsweise über einen Druckpunkt hinaus) zum Aktivieren des Spurwechselassistenzsystems und anschließendem Halten der Betätigung der Blinker nicht unmittelbar aktiviert, um zu verhindern, dass der nachfolgende Verkehr durch die Anzeige eines Spurwechsels mittels aktivem Blinker verunsichert wird, wenn das automatisierte Spurwechselmanöver beispielsweise aufgrund der aktuellen Verkehrssituation noch nicht ausgelöst werden kann.

Es wird bei Betätigung des Blinkerhebels vorzugsweise ein Auslösen dieses Blinkers zumindest so lange unterbunden, bis eine positive Entscheidung für das Einleiten des Spurwechselmanövers vorliegt.

Es ist von Vorteil, wenn im Fahrzeug nicht nur eine automatisierte Spurwechselfunktion vorgesehen ist, sondern auch eine automatisierte Spurhaltefunktion mit zumindest automatischer Querführung (und optional auch automatischer Längsführung) zum automatischen Halten der aktuellen Fahrspur vorhanden ist. Vor Aktivierung der Spurwechselfunktion wird das Fahrzeug vorzugsweise in der Ausgangsfahrspur mittels der Spurhaltefunktion automatisiert gehalten. Das Fahrzeug fährt dabei im teil-oder gar in einem hochautomatisierten Zustand.

Der Fahrer entscheidet sich dann aus einer Situation mit aktiver Spurhaltefunktion für einen Spurwechsel und gibt diesen Fahrerwunsch durch Betätigen des Bedienelements an das Assistenzsystem weiter, wie vorstehend beschrieben wurde. Während der aktiven Spurhaltefunktion wird vorzugsweise fortlaufend geprüft, ob der Fahrer das Lenkrad hält; der Fahrer hat seine Hand also bereits am Lenkrad und kann dann die automatisierte Spurhaltefunktion durch Betätigen des Bedienelements (insbesondere des Blinkerhebels am Lenkstock) aktivieren.

Alternativ wäre es auch möglich, dass der Fahrer zunächst manuell mittels des Lenkrads das Fahrzeug in der Ausgangsspur hält und dann durch Betätigen des Bedienelements die automatisierte Spurwechselfunktion aktiviert.

Es ist von Vorteil, wenn nach Einleiten des Spurwechselmanövers das Assistenzsystem fortlaufend prüft, ob eine Abbruchbedienhandlung seitens des Fahrers vorliegt, und in Reaktion auf eine festgestellte Abbruchbedienhandlung das bereits eingeleitete Spurwechselmanöver abzubrechen. Das Abbrechen des Spurwechselmanövers kann beispielsweise darin bestehen, dass die automatische Querführung beendet wird. Alternativ kann das Abbrechen des Spurwechselmanövers auch darin bestehen, dass über das Assistenzsystem das Fahrzeug wieder auf die Ausgangsfahrspur mit zumindest automatischer Querführung automatisiert zurückgesteuert wird.

Bei der Abbruchbedienhandlung handelt es beispielsweise um ein manuelles Gegenlenken entgegen der Richtung der Nebenfahrspur (also in Richtung der Ausgangsfahrspur) oder in einer alternativen Ausführungsform um ein Betätigen des Blinkerhebels entgegen der Richtung, in der der Blinkerhebel zur Auslösung des Blinkers bei einem manuellen Spurwechsel auf die Nebenfahrspur zu bewegen ist (und damit entgegen der Richtung, in der der Blinkerhebel vorher zum Aktivieren der Spurwechselfunktion betätigt wurde).

Beispielsweise ist das Spurwechselassistenzsystem derart eingerichtet, dass bei Feststellen einer Abbruchbedienhandlung in Form eines manuellen Gegenlenkens entgegen der Richtung der Nebenfahrspur die automatische Querführung beendet wird. Alternativ oder zusätzlich kann das Spurwechselassistenzsystem derart eingerichtet sein, dass bei Feststellen einer Abbruchbedienhandlung in Form eines wie vorstehend beschriebenen entgegengesetzten Betätigens des Blinkerhebels das Fahrzeug wieder auf die Ausgangsfahrspur automatisiert gesteuert wird. Das Zurücksteuern in die Ausgangsfahrspur im Fall der Abbruchbedienhandlung wird aber vorzugsweise nur für den Fall durchgeführt, dass ein Fahrzeugreferenzpunkt (beispielsweise die Mitte der Vorderachse) noch nicht die Spurgrenze zwischen der Ausgangsfahrspur und der Nebenfahrspur überschritten hat.

Ein zweiter Aspekt betrifft ein Spurwechselassistenzverfahren mit einer Spurwechselassistenzfunktion für ein Kraftfahrzeug, bei dem das Fahrzeug auf einen Spurwechselwunsch des Fahrers hin im Rahmen eines automatisierten Spurwechselmanövers mit zumindest automatischer Querführung ausgehend von einer Ausgangsfahrspur auf eine benachbarte Nebenfahrspur automatisiert gesteuert wird. Es sind ein vom Fahrer durch eine dauerhafte Fahrerhandlung dauerhaft betätigbares Bedienelement im Fahrzeugcockpit und eine Umfeldsensorik zur Erfassung von Umfeldinformation bezüglich des Verkehrs zumindest auf der Nebenfahrspur vorgesehen. Das Spurwechselassistenzverfahren umfasst die folgenden Schritte: Es wird eine anfängliche Betätigung des Bedienelements festgestellt, welche einen fahrerseitigen Spurwechselwunsch anzeigt und eine Spurwechselassistenzfunktion aktiviert. Bei aktivierter Spurwechselassistenzfunktion wird dann basierend auf Umfeldinformation bezüglich des Verkehrs zumindest auf der Nebenfahrspur über das Einleiten eines Spurwechselmanövers entschieden. Der Entscheidungsprozess wird solange wiederholt, bis eine positive Entscheidung für das Einleiten des Spurwechselmanövers vorliegt. Parallel dazu wird - zumindest bis eine positive Entscheidung für das Einleiten des Spurwechselmanövers vorliegt - fortlaufend geprüft, ob das Bedienelement immer noch betätigt wird. Das Spurwechselmanöver wird automatisch eingeleitet, sofern eine positive Entscheidung für das Einleiten des Spurwechselmanövers vorliegt und das Bedienelement dann immer noch betätigt wird. Nach Einleiten des Spurwechselmanövers erfolgt ein automatisiertes Steuern des Fahrzeugs auf die benachbarte Nebenfahrspur mit zumindest automatischer Querführung.

Die vorstehenden Ausführungen zum erfindungsgemäßen Spurwechselassistenzsystem nach dem ersten Aspekt der Erfindung gelten in entsprechender Weise auch für das erfindungsgemäße Verfahren nach dem zweiten Aspekt der Erfindung. An dieser Stelle und in den Patentansprüchen nicht explizit beschriebene vorteilhafte Ausführungsbeispiele des erfindungsgemäßen Verfahrens entsprechen den vorstehend beschriebenen oder in den Patentansprüchen beschriebenen vorteilhaften Ausführungsbeispielen des erfindungsgemäßen Spurwechselassistenzsystems.

Die Erfindung wird nachfolgend unter Zuhilfenahme der beigefügten Zeichnungen anhand eines Ausführungsbeispiels beschrieben. In diesen zeigen:
- Fig. 1: ein Fahrzeug mit einem Ausführungsbeispiel eines erfindungsgemäßen Spurwechselassistenzsystems; und
- Fig. 2: die Funktionsweise des in Fig. 1 dargestellten beispielhaften Spurwechselassistenzsystems.

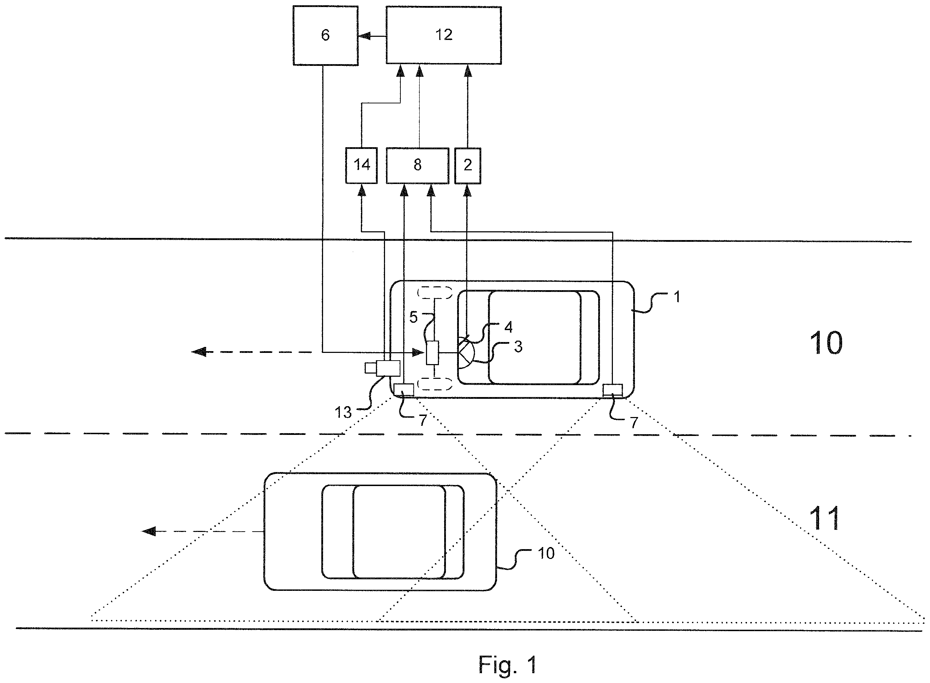

In Fig.1 ist ein sich in Pfeilrichtung bewegender Personenkraftwagen 1 auf einer Ausgangsfahrspur 10 mit einem Ausführungsbeispiel eines erfindungsgemäßen Spurwechselassistenzsystems dargestellt. Das Fahrzeug umfasst ein Lenkrad 3 zum manuellen Lenken des Fahrzeugs 1 und einen im Lenkstock integrierten Blinkerhebel 4. Zur Erfassung der Betätigung des Blinkerhebels 4 dient eine Bedienelektronik 2.

Ferner ist eine elektromechanische Lenkung mit einem Lenkungsstellglied 5 in Form eines Elektromotors vorgesehen, welches über ein elektronisches Lenkungssteuergerät 6 gesteuert wird.

Darüber hinaus ist eine Umfeldsensorik mit einem oder mehreren Sensoren 7 vorgesehen, die zur Erfassung von Umfeldinformation bezüglich des Verkehrs zumindest auf einer Nebenfahrspur 11 dient. Hierzu können ein oder mehrere Seitenradare, aber auch seitliche ausgerichtete Ultraschall oder Kamera basierte Sensoren verwendet werden. Die Mess-Signale der Sensoren 7 werden in einer Umfeldauswertung 8 ausgewertet. Hier werden beispielsweise die Positionen von Objekten (z. B. das dargestellte Fahrzeug 10) auf der Nebenfahrspur 11 und deren jeweilige Geschwindigkeit ermittelt. In dem Spurwechselassistenten 12 oder in einem separaten vorgelagerten Block zur Trajektorienplanung werden basierend auf der in der Umfeldauswertung 8 ermittelten Umfeldinformation geeignete Freiräume auf der Nebenspur 11 sowie passende Trajektorien für ein Spurwechselmanöver ermittelt. Hierbei wird beispielsweise berücksichtigt, ob sich eine Fahrzeug 10 neben dem eigenen Fahrzeug 1 auf der Nebenfahrspur 11 befindet, ob sich ein schnelleres Fahrzeug 10 hinter dem eigenen Fahrzeug 1 auf der Nebenfahrspur 11 befindet oder ein langsameres Fahrzeug auf der Nebenfahrspur 11 vor dem eigenen Fahrzeug 1 befindet.

Darüber hinaus ist eine Frontkamera 13 vorhanden, deren Kamerabild in einer Kameraauswertung 14 ausgewertet wird. Mittels des Kamerabildes der Frontkamera 13 können in der Kameraauswertung 14 die aktuelle Fahrspur 10 vermessen und die Nebenfahrspur 11 erkannt und vermessen werden.

Die Fahrspurinformation wird dem Spurwechselassistenten 12 zur Verfügung gestellt.

Der Spurwechselassistent 12 nimmt ferner ein Signal von der Bedienelektronik 2 entgegen, welches die Betätigung des Blinkerhebels 4 und die Richtung der Betätigung angibt.

Wenn der Spurwechselassistent 12 einen geeigneten Freiraum auf der Nebenfahrspur 11 mit passender Fahrtrajektorie ermittelt hat, und sich schließlich für ein Einleiten eines Spurwechselmanövers entschieden hat, wird, sofern die Betätigung des Blinkerhebel 4 nicht vorher beendet wurde, ein Spurwechselmanöver automatisch eingeleitet. Hierzu steuert der Spurwechselassistent 12 basierend auf der ermittelten Trajektorie das Lenkungssteuergerät durch ein geeignetes Lenkungssteuersignal an, welches in dem Lenkungssteuergerät 6 in ein geeignetes Signal zum Ansteuern des Lenkungsstellglieds 5 übertragen wird.

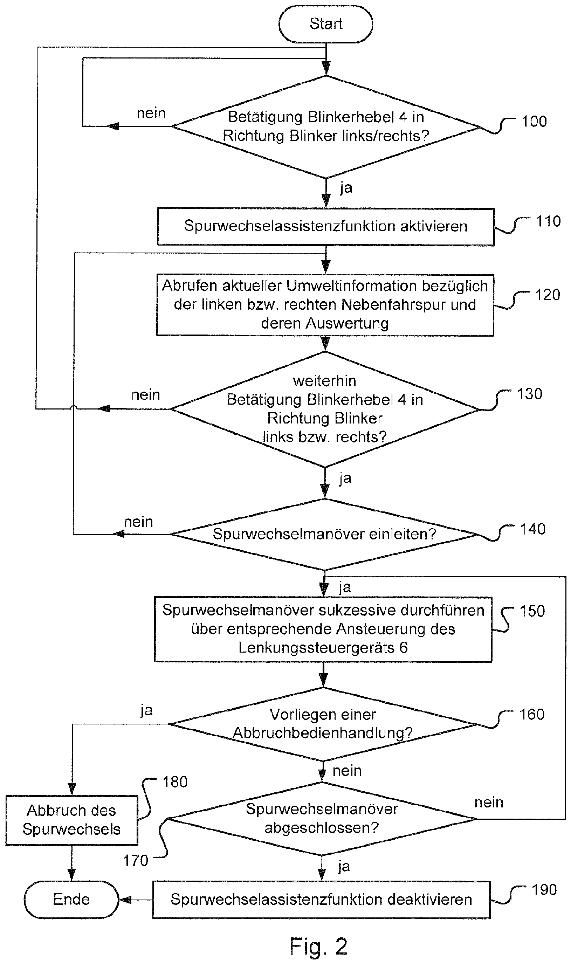

In Fig. 2 ist die Funktionsweise des in Fig. 1 dargestellten beispielhaften Spurwechselassistenzsystems dargestellt. Anfänglich wird in der Abfrage 100 geprüft, ob eine Betätigung des Blinkerhebels 4 in Richtung des Blinkers rechts bzw. links vorliegt. In diesem Zusammenhang kann auch geprüft werden, ob der Blinkerhebel 4 über eine bestimmte Schwelle (z. B. ein Druckpunkt) gedrückt wird, und nur bei Drücken über die Schwelle wird eine positive Betätigung festgestellt.

Wenn der Blinkerhebel 4 entsprechend betätigt ist, wird die Spurwechselassistenzfunktion aktiviert (s. Schritt 110). Es wird dann in Schritt 120 aktuelle Umweltinformation bezüglich der je nach Betätigung des Blinkerhebels 4 linken bzw. rechten Nebenfahrspur 11 abgerufen (beispielsweise Positionen von Objekten auf der Nebenfahrspur 11 und deren Geschwindigkeiten, Vorhandensein der Nebenfahrspur 11 und deren Breite) und ausgewertet. In der Abfrage 130 wird geprüft, ob der Blinkerhebel immer noch betätigt wird. Hierbei kann beispielsweise auch verlangt werden, dass der Blinkerhebel 4 weiterhin über eine bestimmte Schwelle (z. B. ein Druckpunkt) gedrückt ist, und ansonsten eine positive Betätigung verneint wird.

Sofern eine entsprechende Betätigung des Blinkerhebels vorliegt und anhand der aktuelle Umweltinformation das Systems sich für das Einleiten des Spurwechselmanövers entscheidet (s. die Abfrage 140), wird das Spurwechselmanöver sukzessive durchgeführt, indem das Lenkungssteuergerät 6 in entsprechender Weise angesteuert wird (s. Schritt 150).

Hierbei wird fortlaufend geprüft (s. Abfrage 160), ob eine Abbruchbedienhandlung vorliegt. Wenn dies der Fall ist, erfolgt ein Abbruch des Spurwechsels (s. Schritt 180). Beispielsweise wird bei Feststellen einer Abbruchbedienhandlung in Form eines manuellen Gegenlenkens entgegen der Richtung der Nebenfahrspur 11 die automatische Querführung beendet. Bei Feststellen einer Abbruchbedienhandlung in Form eines Betätigens des Blinkerhebels 4 in die entgegengesetzte Richtung wird das Fahrzeug wieder auf die Ausgangsfahrspur 10 automatisiert gesteuert.

Wenn die geplante Spurwechseltrajektorie für das Spurwechselmanöver vollständig durchfahren wurde (s. die Abfrage 170), wird die Spurwechselassistenzfunktion deaktiviert (s. Schritt 190).

## Patentansprüche

1. Spurwechselassistenzsystem (12) mit einer Spurwechselassistenzfunktion für ein Kraftfahrzeug (1), welches eingerichtet ist, das Fahrzeug auf einen Spurwechselwunsch des Fahrers hin im Rahmen eines automatisierten Spurwechselmanövers mit zumindest automatischer Querführung ausgehend von einer Ausgangsfahrspur (10) auf eine benachbarte Nebenfahrspur (11) automatisiert zu steuern, wobei
- ein vom Fahrer durch eine dauerhafte Fahrerhandlung dauerhaft betätigbarer, als Lenkstockhebel ausgebildeter Blinkerhebel (4) zum Auslösen eines Blinkers im Fahrzeugcockpit und
- eine Umfeldsensorik (7, 13) zur Erfassung von Umfeldinformation bezüglich zumindest der Nebenfahrspur vorgesehen sind, und
das Spurwechselassistenzsystem eingerichtet ist,
- eine anfängliche Betätigung des Blinkerhebels (4) festzustellen, welche einen fahrerseitigen Spurwechselwunsch anzeigt und eine Spurwechselassistenzfunktion aktiviert,
- bei aktivierter Spurwechselassistenzfunktion basierend auf Umfeldinformation bezüglich zumindest der Nebenfahrspur (11) über das Einleiten eines Spurwechselmanövers zu entscheiden, und dies zu wiederholen, bis eine positive Entscheidung für das Einleiten des Spurwechselmanövers vorliegt,
- parallel dazu fortlaufend zu prüfen, ob der Blinkerhebel (4) immer noch betätigt wird, zumindest bis eine positive Entscheidung für das Einleiten des Spurwechselmanövers vorliegt,
- die Spurwechselassistenzfunktion vor Einleiten eines Spurwechselmanövers zu deaktivieren, wenn die Betätigung des Blinkerhebels (4) abgebrochen wurde,
- das Spurwechselmanöver automatisch einzuleiten, sofern eine positive Entscheidung für das Einleiten des Spurwechselmanövers vorliegt und der Blinkerhebel (4) dann immer noch betätigt wird; und
- nach Einleiten des Spurwechselmanövers das Fahrzeug (1) auf die benachbarte Nebenfahrspur (11) mit zumindest automatischer Querführung automatisiert zu steuern.

2. Spurwechselassistenzsystem nach einem der vorhergehenden Ansprüche, wobei zum automatisierten Spurwechsel auf die Nebenfahrspur (11) der Blinkerhebel (4) in die gleiche Richtung zu bewegen ist, in die der Blinkerhebel (4) zur Auslösung des Blinkers bei einem manuellen Spurwechsel auf die Nebenfahrspur (11) zu bewegen ist.

3. Spurwechselassistenzsystem nach einem der vorhergehenden Ansprüche, wobei das Spurwechselassistenzsystem eingerichtet ist, bei Betätigung des Blinkerhebels (4) ein Auslösen dieses Blinkers zumindest so lange zu unterbinden, bis eine positive Entscheidung für das Einleiten des Spurwechselmanövers vorliegt.

4. Spurwechselassistenzsystem nach einem der vorhergehenden Ansprüche, wobei neben einer Spurwechselfunktion eine Spurhaltefunktion mit zumindest automatischer Querführung zum automatischen Halten der aktuellen Fahrspur vorgesehen ist, und vor Aktivierung der Spurwechselfunktion das Fahrzeug in der Ausgangsfahrspur (10) mittels der Spurhaltefunktion automatisch gehalten wird.

5. Spurwechselassistenzsystem nach einem der vorhergehenden Ansprüche, wobei das Spurwechselassistenzsystem eingerichtet ist,
- nach Einleiten des Spurwechselmanövers fortlaufend zu prüfen, ob eine Abbruchbedienhandlung seitens des Fahrers vorliegt, und
- und in Reaktion auf das Vorliegen eines Abbruchbedienhandlung das Spurwechselmanöver abzubrechen.

6. Spurwechselassistenzsystem nach Anspruch 5, wobei die Abbruchbedienhandlung eine der folgenden Abbruchbedienhandlungen entspricht:
- manuelles Gegenlenken entgegen der Richtung der Nebenfahrspur (11);
- entgegengesetztes Betätigen des Blinkerhebels entgegen der Richtung, in die der Blinkerhebel zur Auslösung des Blinkers bei einem manuellen Spurwechsel auf die Nebenfahrspur (11) zu bewegen ist.

7. Spurwechselassistenzsystem nach Anspruch 6, wobei das Spurwechselassistenzsystem eingerichtet ist, bei Feststellen einer Abbruchbedienhandlung in Form eines manuellen Gegenlenkens entgegen der Richtung der Nebenfahrspur (11) die automatische Querführung zu beenden.

8. Spurwechselassistenzsystem nach einem der Ansprüche 6 oder 7, wobei das Spurwechselassistenzsystem eingerichtet ist, bei Feststellen einer Abbruchbedienhandlung in Form eines entgegengesetzten Betätigens des Blinkerhebels (4) das Fahrzeug (1) wieder auf die Ausgangsfahrspur (10) automatisiert zu steuern.

9. Spurwechselassistenzverfahren mit einer Spurwechselassistenzfunktion für ein Kraftfahrzeug (1), bei dem das Fahrzeug (1) auf einen Spurwechselwunsch des Fahrers hin im Rahmen eines automatisierten Spurwechselmanövers mit zumindest automatischer Querführung ausgehend von einer Ausgangsfahrspur (10) auf eine benachbarte Nebenfahrspur (11) automatisiert gesteuert wird, wobei
- ein vom Fahrer durch eine dauerhafte Fahrerhandlung dauerhaft betätigbarer, als Lenkstockhebel ausgebildeter Blinkerhebel (4) zum Auslösen eines Blinkers im Fahrzeugcockpit und
- eine Umfeldsensorik (7, 13) zur Erfassung von Umfeldinformation bezüglich zumindest der Nebenfahrspur vorgesehen sind, und
das Spurwechselassistenzverfahren die folgenden Schritte umfasst:
- Feststellen einer anfänglichen Betätigung des Blinkerhebels (4), welche einen fahrerseitigen Spurwechselwunsch anzeigt und eine Spurwechselassistenzfunktion aktiviert;
- bei aktivierter Spurwechselassistenzfunktion, Entscheiden basierend auf Umfeldinformation bezüglich zumindest der Nebenfahrspur (11) über das Einleiten eines Spurwechselmanövers, und Wiederholen dessen, bis eine positive Entscheidung für das Einleiten des Spurwechselmanövers vorliegt;
- parallel dazu fortlaufendes Prüfen, ob der Blinkerhebel (4) immer noch betätigt wird, zumindest bis eine positive Entscheidung für das Einleiten des Spurwechselmanövers vorliegt;
- Deaktivieren der Spurwechselassistenzfunktion vor Einleiten eines Spurwechselmanövers, wenn die Betätigung des Blinkerhebels (4) abgebrochen wurde;
- automatisches Einleiten des Spurwechselmanövers, sofern eine positive Entscheidung für das Einleiten des Spurwechselmanövers vorliegt und der Blinkerhebel (4) dann immer noch betätigt wird; und
- nach Einleiten des Spurwechselmanövers automatisiertes Steuern des Fahrzeugs (1) auf die benachbarte Nebenfahrspur (11) mit zumindest automatischer Querführung.

## Claims

1. Lane change assistance system (12) having a lane change assistance function for a motor vehicle (1), which is designed to steer the vehicle from a starting lane (10) to a neighbouring adjacent lane (11) in an automated manner in response to a lane change request from the driver in the course of an automated lane change manoeuvre with at least automatic transverse guidance, wherein provision is made for
- an indicator light lever (4), able to be actuated continuously by the driver through a continuous driver operation and in the form of a steering column lever, for triggering an indicator light in the vehicle cockpit and
- a surroundings sensor system (7, 13) for acquiring surroundings information with regard at least to the adjacent lane,
and
the lane change assistance system is designed
- to identify initial actuation of the indicator light lever (4) that indicates a driver's lane change request and activates a lane change assistance function,
- when the lane change assistance function is activated, to make a decision about initiating a lane change manoeuvre based on surroundings information with regard at least to the adjacent lane (11), and to repeat this until a positive decision for initiating the lane change manoeuvre is present,
- in parallel therewith, to continuously check whether the indicator light lever (4) is still actuated, at least until a positive decision for initiating the lane change manoeuvre is present,
- to deactivate the lane change assistance function before initiating a lane change manoeuvre if the actuation of the indicator light lever (4) has been cancelled,
- to automatically initiate the lane change manoeuvre if a positive decision for initiating the lane change manoeuvre is present and the indicator light lever (4) is still actuated; and
- following initiation of the lane change manoeuvre, to steer the vehicle (1) onto the neighbouring adjacent lane (11) in an automated manner with at least automatic transverse guidance.

2. Lane change assistance system according to one of the preceding claims, wherein, for the automated lane change to the adjacent lane (11), the indicator light lever (4) needs to be moved in the same direction in which the indicator light lever (4) needs to be moved in order to trigger the indicator light in the case of a manual lane change to the adjacent lane (11).

3. Lane change assistance system according to either of the preceding claims, wherein the lane change assistance system is designed, when the indicator light lever (4) is actuated, to suppress triggering of this indicator light at least until a positive decision for initiating the lane change manoeuvre is present.

4. Lane change assistance system according to one of the preceding claims, wherein, in addition to a lane change function, provision is made for a lane keep function with at least automatic transverse guidance to automatically stay in the current lane and, before the lane change function is activated, the vehicle is automatically kept in the starting lane (10) by way of the lane keep function.

5. Lane change assistance system according to one of the preceding claims, wherein the lane change assistance system is designed,
- after the lane change manoeuvre has been initiated, to continuously check whether a cancellation action from the driver is present, and
- and to cancel the lane change manoeuvre in response to the presence of a cancellation action.

6. Lane change assistance system according to Claim 5, wherein the cancellation action corresponds to one of the following cancellation actions:
- manually steering away counter to the direction of the adjacent lane (11);
- actuating the indicator light lever away counter to the direction in which the indicator light lever needs to be moved in order to trigger the indicator light in the case of a manual lane change to the adjacent lane (11).

7. Lane change assistance system according to Claim 6, wherein the lane change assistance system is designed to end the automatic transverse guidance upon identifying a cancellation action in the form of manually steering away counter to the direction of the adjacent lane (11).

8. Lane change assistance system according to either of Claims 6 and 7, wherein the lane change assistance system is designed, upon identifying a cancellation action in the form of opposing actuation of the indicator light lever (4), to automatically steer the vehicle (1) back onto the starting lane (10).

9. Lane change assistance method having a lane change assistance function for a motor vehicle (1), in which the vehicle (1) is steered from a starting lane (10) to a neighbouring adjacent lane (11) in an automated manner in response to a lane change request from the driver in the course of an automated lane change manoeuvre with at least automatic transverse guidance, wherein provision is made for
- an indicator light lever (4), able to be actuated continuously by the driver through a continuous driver operation and in the form of a steering column lever, for triggering an indicator light in the vehicle cockpit and
- a surroundings sensor system (7, 13) for acquiring surroundings information with regard at least to the adjacent lane,
and
the lane change assistance method comprises the following steps:
- identifying initial actuation of the indicator light lever (4) that indicates a driver's lane change request and activates a lane change assistance function;
- when the lane change assistance function is activated, making a decision about initiating a lane change manoeuvre based on surroundings information with regard at least to the adjacent lane (11), and repeating this until a positive decision for initiating the lane change manoeuvre is present;
- in parallel therewith, continuously checking whether the indicator light lever (4) is still actuated, at least until a positive decision for initiating the lane change manoeuvre is present;
- deactivating the lane change assistance function before initiating a lane change manoeuvre if the actuation of the indicator light lever (4) has been cancelled;
- automatically initiating the lane change manoeuvre if a positive decision for initiating the lane change manoeuvre is present and the indicator light lever (4) is still actuated; and
- following initiation of the lane change manoeuvre, steering the vehicle (1) onto the neighbouring adjacent lane (11) in an automated manner with at least automatic transverse guidance.

## Revendications

1. Système d'aide au changement de voie (12) présentant une fonction d'aide au changement de voie pour un véhicule automobile (1), lequel système est conçu pour commander de manière automatisée le véhicule suite à une demande de changement de voie par le conducteur dans le cadre d'une manœuvre automatisée de changement de voie avec un guidage transversal au moins automatique à partir d'une voie de circulation d'origine (10) vers une voie de circulation supplémentaire adjacente (11), dans lequel il est prévu
- un levier de clignotant (4) pouvant être actionné par le conducteur de manière durable par une action durable du conducteur et réalisé sous forme de levier de colonne de direction pour le déclenchement d'un clignotant dans l'habitacle du véhicule et
- un système de capteurs d'environnement (7, 13) pour la détection d'informations d'environnement se rapportant au moins à la voie de circulation supplémentaire, et
le système d'aide au changement de voie est conçu
- pour déterminer un actionnement initial du levier de clignotant (4), lequel indique une demande de changement de voie de la part du conducteur et active une fonction d'aide au changement de voie,
- lorsque la fonction d'aide au changement de voie est activée, sur la base d'informations d'environnement se rapportant au moins à la voie de circulation supplémentaire (11), pour prendre la décision de déclencher une manœuvre de changement de voie, et pour répéter celle-ci jusqu'à ce qu'une décision positive de déclenchement de la manœuvre de changement de voie soit prise,
- pour, en parallèle à cela, vérifier en continu si le levier de clignotant (4) est toujours actionné, au moins jusqu'à ce qu'une décision positive de déclenchement de la manœuvre de changement de voie soit prise,
- pour désactiver la fonction d'aide au changement de voie avant le déclenchement d'une manœuvre de changement de voie lorsque l'actionnement du levier de clignotant (4) a été interrompu,
- pour déclencher automatiquement la manœuvre de changement de voie si une décision positive de déclenchement de la manœuvre de changement de voie a été prise et que le levier de clignotant (4) est ensuite toujours actionné ; et
- après le déclenchement de la manœuvre de changement de voie, pour commander de manière automatisée le véhicule (1) vers la voie de circulation supplémentaire adjacente (11) avec un guidage transversal au moins automatique.

2. Système d'aide au changement de voie selon l'une des revendications précédentes, dans lequel, pour le changement automatisé de voie vers la voie de circulation supplémentaire (11), le levier de clignotant (4) doit être déplacé dans la même direction que celle dans laquelle le levier de clignotant (4) doit être déplacé pour déclencher le clignotant lors d'un changement manuel de voie vers la voie de circulation supplémentaire (11).

3. Système d'aide au changement de voie selon l'une des revendications précédentes, le système d'aide au changement de voie étant conçu, lors de l'actionnement du levier de clignotant (4), pour empêcher un déclenchement de ce clignotant au moins jusqu'à ce qu'une décision positive de déclenchement de la manœuvre de changement de voie soit prise.

4. Système d'aide au changement de voie selon l'une des revendications précédentes, dans lequel, en plus d'une fonction de changement de voie, une fonction de maintien sur la voie avec guidage transversal au moins automatique pour le maintien automatique sur la voie de circulation actuelle est prévue, et avant l'activation de la fonction de changement de voie, le véhicule est maintenu automatiquement dans la voie de circulation initiale (10) au moyen de la fonction de maintien sur la voie.

5. Système d'aide au changement de voie selon l'une des revendications précédentes, le système d'aide au changement de voie étant conçu
- après le déclenchement de la manœuvre de changement de voie, pour vérifier en continu si une action de commande d'interruption par le conducteur est présente, et
- et en réaction à la présence d'une action de commande d'interruption, pour interrompre la manœuvre de changement de voie.

6. Système d'aide au changement de voie selon la revendication 5, dans lequel l'action de commande d'interruption correspond à l'une des actions de commande d'interruption suivantes :
- contre-braquage manuel en sens contraire à la direction de la voie de circulation supplémentaire (11) ;
- actionnement opposé du levier de clignotant en sens contraire à la direction dans laquelle le levier de clignotant doit être déplacé pour le déclenchement du clignotant lors d'un changement manuel de voie vers la voie de circulation supplémentaire (11).

7. Système d'aide au changement de voie selon la revendication 6, le système d'aide au changement de voie étant conçu pour mettre fin au guidage transversal automatique lors de la détermination d'une action de commande d'interruption sous la forme d'un contre-braquage manuel en sens contraire à la direction de la voie de circulation supplémentaire (11).

8. Système d'aide au changement de voie selon l'une des revendications 6 ou 7, le système d'aide au changement de voie étant conçu pour commander de manière automatisée le véhicule (1) à nouveau vers la voie de circulation initiale (10) lors de la détermination d'une action de commande d'interruption sous la forme d'un actionnement opposé du levier de clignotant (4).

9. Procédé d'aide au changement de voie à l'aide d'une fonction d'aide au changement de voie pour un véhicule automobile (1), dans lequel le véhicule (1) est commandé de manière automatisée suite à une demande de changement de voie par le conducteur dans le cadre d'une manœuvre automatisée de changement de voie avec un guidage transversal au moins automatique à partir d'une voie de circulation d'origine (10) vers une voie de circulation supplémentaire adjacente (11), dans lequel il est prévu
- un levier de clignotant (4) pouvant être actionné par le conducteur de manière durable par une action durable du conducteur et réalisé sous forme de levier de colonne de direction pour le déclenchement d'un clignotant dans l'habitacle du véhicule et
- un système de capteurs d'environnement (7, 13) pour la détection d'informations d'environnement se rapportant au moins à la voie de circulation supplémentaire, et
le système d'aide au changement de voie comportant les étapes suivantes :
- détermination d'un actionnement initial du levier de clignotant (4), lequel indique une demande de changement de voie de la part du conducteur et active une fonction d'aide au changement de voie ;
- lorsque la fonction d'aide au changement de voie est activée, décision de déclencher une manœuvre de changement de voie sur la base d'informations d'environnement se rapportant au moins à la voie de circulation supplémentaire (11), et pour répétition de celle-ci jusqu'à ce qu'une décision positive de déclenchement de la manœuvre de changement de voie soit prise ;
- en parallèle à cela, vérification en continu si le levier de clignotant (4) est toujours actionné, au moins jusqu'à ce qu'une décision positive de déclenchement de la manœuvre de changement de voie soit prise ;
- désactivation de la fonction d'aide au changement de voie avant le déclenchement d'une manœuvre de changement de voie lorsque l'actionnement du levier de clignotant (4) a été interrompu,
- déclenchement automatiquement de la manœuvre de changement de voie si une décision positive de déclenchement de la manœuvre de changement de voie a été prise et que le levier de clignotant (4) est ensuite toujours actionné ; et
- après le déclenchement de la manœuvre de changement de voie, commande automatisée du véhicule (1) vers la voie de circulation supplémentaire adjacente (11) avec un guidage transversal au moins automatique.
